# EUROPÄISCHE PATENTSCHRIFT

(11) **EP 3 586 028 B1**
(45) Veröffentlichungstag und Bekanntmachung des Hinweises auf die Patenterteilung: **20.01.2021**
(21) Anmeldenummer: 17720500.2
(22) Anmeldetag: 02.05.2017
(51) Int. Cl.: F16F 1/38, B62D 7/22, F16D 3/76

(54) **ELASTISCHES LAGER**
ELASTIC BEARING
PALIER ÉLASTIQUE

(30) Priorität: 23.02.2017 DE 102017103779
(43) Veröffentlichungstag der Anmeldung: 01.01.2020
(73) Patentinhaber: Vibracoustic AG, 64293 Darmstadt (DE)
(72) Erfinder: WERNER, Philipp, 21339 Lüneburg (DE); KARDOES, Hilrich, 21423 Winsen (DE)
(74) Vertreter: Patentanwälte Olbricht Buchhold Keulertz
(86) Internationale Anmeldenummer: PCT/EP2017/060366
(87) Internationale Veröffentlichungsnummer: WO 2018/153504

(56) Entgegenhaltungen:
- WO-A1-2010/102611
- DE-A1-102012 005 836
- FR-A1- 2 731 197
- GB-A- 958 116

## Beschreibung

Die vorliegende Erfindung betrifft ein elastisches Lager, insbesondere ein Lenkspindellager, zum drehelastischen Verbinden zweier Wellenabschnitte einer Lenksäule, aufweisend ein Innenteil, das mit einem Ende eines der Wellenabschnitte verbindbar ist, eine das Innenteil umgebende Außenhülse, die mit einem Ende des anderen Wellenabschnitts verbindbar ist, und einen Elastomerkörper, der zwischen dem Innenteil und der Außenhülse angeordnet ist.

Ein elastisches Lager der eingangs genannten Art, das auch als Lenkspindellager bezeichnet werden kann, wird zur Lagerung und Verbindung zweier Wellenabschnitte einer Lenksäule eingesetzt, um die von dem Fahrwerk eingeleiteten Schwingungen zu dämpfen und so vom Lenkrad abzukoppeln.

Hierzu ist es bekannt, ein elastisches Lager der eingangs genannten Art als Gelenkscheibenlager auszuführen. Ein als Gelenkscheibenlager ausgebildetes elastisches Lager weist eine Vielzahl an Buchsen, die von Schlingen- oder Fadenpaketen umschlungen sind, und einen Elastomerkörper auf, in dem die Buchsen und Fadenpakete zumindest teilweise eingebettet sind.

Ferner kann ein elastisches Lager der eingangs genannten Art mittels der ZweiKomponenten-Kunststoffspritzgusstechnik ausgeführt sein, indem zunächst zwei sich in Axialrichtung erstreckende Polygonprofile hergestellt werden und anschließend in deren Zwischenraum ein Elastomer eingespritzt wird.

Ein derartiges Lager ist beispielsweise aus DE 10 2011 008 396 A1 bekannt, das eine innere Buchse mit einem Polygonprofil und eine die innere Buchse umgebende äußere Buchse mit einem Polygonprofil aufweist, wobei die beiden Buchsen über eine elastomere Dämpfungsschicht drehmomentübertragend gekoppelt sind. In die Dämpfungsschicht sind axiale Ausnehmungen zur Einstellung der Torsionssteifigkeit eingebracht.

Zudem ist es bekannt, ein elastisches Lager der eingangs genannten Art dadurch zu erzeugen, dass unmittelbar ein Elastomerkörper auf einen Wellenabschnitt einer Lenksäule aufvulkanisiert wird. Ein derartiges Lager ist beispielsweise aus DE 102 26 949 B4 bekannt, bei dem ein Elastomerkörper unmittelbar auf ein profiliertes Innenrohr aufvulkanisiert ist und ein profiliertes hohles Außenrohr auf das mit dem Elastomerkörper ummantelte Innenrohr aufgeschoben wird.

GB 958,116 A offenbart eine Übertragungskupplung, die eine Innenhülse, in die eine Flanschwelle eingesetzt ist, eine aus zwei Hälften gebildete Außenhülse und elastomere Kopplungselemente aufweist. Die Innenhülse weist radial abragende Rippen auf, die in Ausnehmungen der Außenhülse zur Übertragung einer Drehbewegung eingreifen. Zwischen den Rippen und den Ausnehmungen sind elastomere Kopplungselemente angeordnet. Im verbundenen Zustand der beiden Hälften der Außenhülse sind die elastomeren Kopplungselemente komprimiert.

Der vorliegenden Erfindung liegt die Aufgabe zugrunde, ein elastisches Lager zu schaffen, das eine verbesserte Einstellung der Torsionssteifigkeit ermöglicht und gleichzeitig eine einfache und kostengünstige Herstellung sowie eine verbesserte Montierbarkeit und Lagesicherung zwischen dem Innenteil und der Außenhülse gewährleistet.

Diese Aufgabe wir durch ein elastisches Lager mit den Merkmalen des Anspruchs 1 gelöst.

Vorteilhafte Ausgestaltungen des elastischen Lagers sind Gegenstand der abhängigen Ansprüche.

Gemäß einem Aspekt der Erfindung wird die Aufgabe durch ein elastisches Lager, insbesondere einem Lenkspindellager, gelöst, das zum drehelastischen Verbinden zweier Wellenabschnitte einer Lenksäule, ein Innenteil, das mit einem Ende eines der Wellenabschnitte verbindbar ist, eine das Innenteil umgebende Außenhülse, die mit einem Ende des anderen Wellenabschnitts verbindbar ist, und einen Elastomerkörper aufweist, der zwischen dem Innenteil und der Außenhülse angeordnet ist, wobei das Innenteil wenigstens eine in Radialrichtung abragende Rippe aufweist, die zur Übertragung einer Drehbewegung in eine korrespondierende Vertiefung der Außenhülse eingreift, und wobei die Außenhülse aus wenigstens zwei Teilen gebildet ist.

Durch die zweiteilige Außenhülse kann das Gummi mit hoher Designfreiheit entweder auf dem Innenteil oder in die zweiteilige Außenhülse gestaltet werden. Da die beiden Teile der Außenhülse um das Innenteil gelegt werden, kann bei diesem Fügeprozess eine radiale Vorspannung auf den Elastomerkörper gebracht werden. Dadurch können Kennungen, insbesondere eine Torsionsgrundkennung, eingestellt und die Lebensdauer erhöht werden. Zudem kann durch eine Vorspannung im Elastomerkörper eine über die Lebensdauer sichere und genaue Positionierung des elastischen Lagers in der Lenksäule gewährleistet werden und eine über kleine Verdrehwinkel einstellbare, progressive und stetig versteifende Kennlinie erzeugt werden. Darüber hinaus können durch den zweiteiligen Aufbau der Außenhülse große Hinterschnitte in axialer Richtung erzeugt werden, die bei einem Ineinanderschieben von Innenteil und Außenhülse, zusammen mit dem auf einer Komponente aufvulkanisierten Elastomerkörper, nicht realisierbar wären, ohne das Elastomer zu schädigen.

Die zweiteilige Ausführung der Außenhülse gewährleistet ferner die notwendige Designfreiheit, um zusätzliche, weich einsetzende, gegebenenfalls sogar mehrstufige Endanschläge in das Lager zu integrieren. Dadurch sind im Elastomerkörper in Längsrichtung des elastischen Lagers variierende Konturen, wie beispielsweise Vorsprünge, realisierbar. Die Endanschläge dienen dazu, den Elastomerkörper bei großen Lasten vor einer Überlast in Torsionsrichtung zu schützen.

Die Teile der Außenhülse können aus einem Kunststoff oder Metall sein. Bevorzugt sind die beiden Teile der Außenhülse als Kunststoffspritzgussteil ausgeführt. Das Kunststoffspritzgießen ermöglicht eine große Gestaltungsfreiheit der Innenmantelfläche der Außenhülse. Zur Montage des elastischen Lagers werden die beiden Teile unmittelbar vor dem Verbau mit einer Lenkspindel um das Innenteil gelegt und fixiert. So können die beiden Teile der Außenhülse miteinander verschweißt werden. Ferner kann das elastische Lager mit den Wellenabschnitten einer Lenkspindel verpresst und dadurch fixiert werden. Zudem können die beiden Teile der Außenhülse mit einer Transportsicherung versehen sein. Die Transportsicherung kann als Clipsverbindung oder als Schnapphaken ausgeführt sein.

Darüber hinaus ist das elastische Lager einfach und kostengünstig herstellbar, da die Dimensionen des erforderlichen Vulkanisationswerkzeugs vergleichsweise klein sind. Entweder wird auf das Innenteil samt aufvulkanisierten Elastomerkörper dann die Außenhülse oder die Außenhülse samt vulkanisiertem Elastomerkörper wird auf das Innenteil montiert.

Durch die Gestaltung des Elastomerkörpers, insbesondere im Bereich der Rippe, kann die Torsionssteifigkeit exakt eingestellt werden, so dass das elastische Lager einfach zu tunen ist. Darüber hinaus kann auf einfache Weise ein Torsionsanschlag in dem elastischen Lager integriert werden. So kann der Elastomerkörper zumindest abschnittsweise zwischen der Außenhülse und dem Innenteil geklemmt werden und so zur Torsionsgrundkennung beitragen, oder der Elastomerkörper kann zumindest abschnittsweise zwischen der Außenhülse und dem Innenteil unter Ausbildung eines Spaltes beabstandet sein und so einen Torsionsanschlag bilden. Der Torsionsanschlag wird erst nach Überbrückung eines durch den Spalt vorgegeben Torsionswinkels wirksam. Bevorzugt wird die Torsionskennung und somit die Torsionssteifigkeit über die Schichtdicke des Elastomerkörpers auf der Rippe und/oder die Breite der Vertiefung eingestellt. Bevorzugt ist die Außenhülse aus einem Metall oder Kunststoff.

Zwischen dem Elastomerkörper und der Außenhülse und/oder dem Innenteil ist eine Fixierungseinrichtung vorgesehen, die eine Relativbewegung zwischen dem Innenteil und der Außenhülse entlang einer Längsachse des Lagers weitgehend verhindert. Die Fixierungseinrichtung ermöglicht eine lagegenaue axiale Positionierung und Fixierung des Innenteils und der Außenhülse zueinander, so dass das Innenteil und die Außenhülse während des Transports und/oder der Montage ihre axiale Position zueinander einhalten. Die Fixierungseinrichtung erlaubt eine Relativverdrehung von dem Innenteil zu der Außenhülse und umgekehrt. Bevorzugt ist die Fixierungseinrichtung in geringem Umfang elastisch.

In einer vorteilhaften Ausgestaltung ist die Fixierungseinrichtung eine Verbindung, die entweder zwischen dem Elastomerkörper und dem Innenteil oder zwischen dem Elastomerkörper und der Außenhülse gebildet ist. Dadurch wird auf einfache und kostengünstige Weise eine genaue axiale Lagersicherung des Innenteils und der Außenhülse zueinander geschaffen. Vorteilhaft ist die Fixierungseinrichtung eine formschlüssige und/oder kraftschlüssige Verbindung.

Die Fixierungseinrichtung weist wenigstens einen in Radialrichtung abragenden Vorsprung und wenigstens eine in eine Außenmantelfläche des Innenteils eingebrachte, korrespondierende Aussparung und/oder wenigstens eine in eine Innenmantelfläche der Außenhülse eingebrachte, korrespondierende Aussparung auf, in die der Vorsprung eingreift. Vorteilhaft greift der Vorsprung formschlüssig und/oder kraftschlüssig in die Aussparung ein. Um eine verbesserte Lagesicherung zu schaffen, kann der Vorsprung rippenförmig ausgebildet sein. Der Vorsprung kann aus dem Material des Innenteils, der Außenhülse und/oder dem Elastomerkörper gebildet sein.

Darüber hinaus kann die Fixierungseinrichtung eine Vielzahl in Radialrichtung abragende Vorsprünge und in die Außenmantelfläche des Innenteils oder in die Innenmantelfläche der Außenhülse eingebrachte, korrespondierende Aussparungen aufweisen, in die die Vorsprünge eingreifen. Vorteilhaft greifen die Vorsprünge formschlüssig und/oder kraftschlüssig in die Aussparungen ein. Bevorzugt sind die Vorsprünge rippenförmig ausgebildet.

In einer vorteilhaften Ausgestaltung verläuft der Vorsprung in eine Umfangsrichtung des Lagers. So kann der Vorsprung nur über einen Abschnitt der Außenmantelfläche des Elastomerkörpers oder über den gesamten Umfang der Außenmantelfläche des Elastomerkörpers verlaufen.

In einer vorteilhaften Ausgestaltung ist der Vorsprung aus dem Elastomer des Elastomerkörpers gebildet. Dadurch ist der Vorsprung während des Einspritzens des Elastomers in die Vulkanisationsform erzeugbar und damit kostengünstig herstellbar. Radiale Vorsprünge im Elastomerkörper können in korrespondierende Aussparungen oder Taschen im Gegenteil eingreifen und so für eine axiale Fixierung sorgen. Bei einer Vulkanisation des Elastomerkörpers auf das Innenteil greifen die Vorsprünge in Aussparungen der Außenhülse ein. Bei einer Vulkanisation des Elastomerkörpers in die zweiteilige Außenhülse, sind die Vorsprünge radial einwärts gerichtet und greifen in Aussparungen am Innenteil ein.

In einer vorteilhaften Ausgestaltung sind entlang der Längsachse mehrere parallel zueinander angeordnete Vorsprünge und korrespondierende Aussparungen vorgesehen. Dadurch wird eine ausreichende axiale Lagesicherung des Innenteils und der Außenhülse entlang einer Längsachse des Lagers geschaffen. Die entlang der Längsachse parallel angeordneten Vorsprünge und dazu korrespondierenden Aussparungen können in Umfangsrichtung des Lagers versetzt oder parallel angeordnet sein.

In einer vorteilhaften Ausgestaltung weist das Innenteil mehrere in Radialrichtung abragende Rippen auf, die zur Übertragung einer Drehbewegung in korrespondierende Vertiefungen der Außenhülse eingreifen. Das Innenteil und die Außenhülse können eine gerade Anzahl an Rippen und/oder Vertiefungen oder eine ungerade Anzahl an Rippen und/oder Vertiefungen aufweisen. Bei einer geraden Anzahl an Rippen ergeben vorteilhaft die jeweils gegenüberliegenden Rippen mit den Vertiefungen eine identische Kennung, so dass Torsionsbelastungen zu keiner resultierenden Radial- oder Axialkraft und umgekehrt führen. Hierzu kann der auf den gegenüberliegenden Rippen aufgebrachte Elastomerkörper entweder von der Außenhülse geklemmt und/oder beabstandet sein. So kann das Innenteil zum Beispiel vier Rippen und das Außenteil vier korrespondierende Aussparungen aufweisen. Ferner kann das Innenteil eine beliebige Anzahl an Rippen und das Außenteil eine entsprechende Anzahl korrespondierender Aussparungen aufweisen.

In einer vorteilhaften Ausgestaltung ist zwischen jeweils zwei Rippen wenigstens ein in Radialrichtung abragender Vorsprung angeordnet, der in eine dazu korrespondierende Aussparung der Außenhülse und/oder des Innenteils eingreift, oder dass innerhalb jeder Vertiefung wenigstens ein in Radialrichtung abragender Vorsprung angeordnet ist, der in eine dazu korrespondierende Aussparung des Innenteils eingreift. Vorteilhaft ist die Aussparung in eine Innenmantelfläche der Außenhülse und/oder eine Außenmantelfläche des Innenteils eingebracht. Weiterhin vorteilhaft greift der Vorsprung formschlüssig und/oder kraftschlüssig in die dazu korrespondierende Aussparung ein. Bevorzugt greifen die innerhalb der Vertiefung angeordneten Vorsprünge in Vertiefungen ein, die in die Rippen eingebracht sind. Der Vorsprung kann derart zwischen zwei Rippen angeordnet sein, dass er von den Rippen beabstandet ist oder die Rippen kontaktiert. Ferner können zwischen zwei Rippen wenigstens zwei Vorsprünge angeordnet sein, die bevorzugt in Längsrichtung des Lagers parallel zueinander angeordnet sind. Ferner können die Vorsprünge unterschiedlich dimensioniert sein. So können die Vorsprünge und die dazu korrespondierenden Aussparungen eine unterschiedliche Länge in Umfangsrichtung, eine unterschiedliche Breite und/oder Höhe aufweisen. Ferner können die Vorsprünge und die dazu korrespondierenden Aussparungen eine variierende Kontur aufweisen.

In einer vorteilhaften Ausgestaltung ist die Außenhülse aus wenigstens zwei Halbschalen gebildet. Bevorzugt ist die Außenhülse aus zwei Halbschalen gebildet, wenn das Innenteil vier Rippen aufweist. Die Außenhülse kann aus drei Halbschalen gebildet sein, wenn das Innenteil mehr als fünf Rippen aufweist.

In einer vorteilhaften Ausgestaltung ist die Außenhülse aus wenigstens zwei Hülsenabschnitten gebildet. Hierzu kann die Außenhülse senkrecht zur Längsachse geteilt sein. Bevorzugt ist die Außenhülse aus zwei Hülsenabschnitten gebildet, wenn das Innenteil drei, fünf oder mehr Rippen aufweist. In diesem Fall ist es weiterhin vorteilhaft, wenn das Innenteil der Fixierungseinrichtung zwischen den beiden Außenhülsen form- und/oder kraftschlüssig mit dieser verbunden wird. Weiterhin vorteilhaft ist die Außenhülse aus zwei Hülsenabschnitten gebildet, wenn jeweils ein Vorsprung zwischen zwei Rippen angeordnet und an diese angebunden ist.

Vorteilhaft sind die wenigstens zwei Teile der Außenhülse formschlüssig, kraftschlüssig und/oder stoffschlüssig miteinander verbunden. Die Teile können mittels einer Clipsverbindung miteinander verbunden sein. Ferner können die Teile miteinander verschweißt sein. Wenn die beiden Teile der Außenhülse aus einem Kunststoff hergestellt sind, wird bevorzugt Ultraschallschweißen oder Laserdurchstrahlschweißen verwendet, um die Teile miteinander zu verbinden.

In einer vorteilhaften Ausgestaltung ist die Außenhülse aus einem Kunststoff. Dadurch weist das elastische Lager ein geringes Gewicht auf. Wenn die Außenhülse aus mehreren Teilen gebildet ist, dann können die Teile mittels eines Schweißvorgangs stoffschlüssig miteinander verbunden sein. Vorteilhaft kann die Vorspannung während des Schweißvorgangs aufgebracht werden. Zudem kann durch das Verschweißen der Teile der Außenhülse das elastische Lager in ein Kräftegleichgewicht gebracht werden, das heißt, die Teile der Außenschale können sich nicht wieder öffnen, so dass ein Einpressen des elastischen Lagers in ein Aufnahmeauge des Wellenabschnitts einfacher vorzunehmen ist, als wenn das elastische Lager noch zusammengedrückt werden müsste.

In einer vorteilhaften Ausgestaltung ist der Elastomerkörper stoffschlüssig mit dem Innenteil oder der Außenhülse verbunden. Insbesondere ist der Elastomerkörper auf eine Außenfläche des Innenteils gespritzt und anschließend vulkanisiert. Während des Aufspritzens kann der wenigstens eine Vorsprung der Fixierungseinrichtung erzeugt werden. Darüber hinaus kann über die Schichtdicke des Elastomerkörpers, die auf die wenigstens ein Rippe aufgebracht wird, die Torsionsgrundkennung und die Torsionsanschlagsprogression eingestellt werden. So kann beispielsweise eine dünne Elastomerschicht auf die Rippe aufgebracht sein, um einen Spalt zwischen dem Elastomerkörper und der Außenhülse auszubilden. Ferner kann eine dicke Elastomerschicht auf die Rippe aufgebracht werden, so dass der Elastomerkörper von der Außenhülse geklemmt wird. Wenn das Innenteil mehrere Rippen aufweist, können ein Teil der Rippen mit einer dünnen Elastomerschicht und der andere Teil mit einer dicken Elastomerschicht versehen sein. Darüber hinaus ist es auch denkbar, dass zur Einstellung der Torsionsgrundkennung und der Torsionsanschlagprogression die Breite wenigstens einer Rippe und/oder wenigstens einer Ausnehmung verändert oder variiert wird.

Bei einer Vulkanisation des Elastomers auf das Innenteil greifen die aus dem Elastomer gebildeten Vorsprünge der Fixierungseinrichtung in Aussparungen der Außenhülse ein. Bei einer Vulkanisation des Elastomers auf eine Innenmantelfläche der Außenhülse greifen die aus dem Elastomer gebildeten Vorsprünge der Fixierungseinrichtung in Aussparungen des Innenteils ein. Sowohl bei einer Vulkanisation des Elastomerkörpers auf das Innenteil als auch in die Außenschale sind einfache Werkzeugkonzepte realisierbar. Im Falle der Vulkanisation auf das Innenteil genügt ein einfaches Leistenwerkzeug, in welches die Innenteile stehend eingelegt werden können, um so platzsparend eine hohe Anzahl an Teilen gleichzeitig vulkanisieren zu können. Im Falle der Vulkanisation in die Teile der Außenhülse genügt ein einfaches zu öffnendes und schließendes Werkzeug ohne Leisten.

In einer vorteilhaften Ausgestaltung weist die Außenhülse eine Positioniereinrichtung auf, die beim Verbinden der Außenhülse mit dem Ende eines der Wellenabschnitte deren Position zueinander festlegt. Bevorzugt ist die Positioniereinrichtung auf einer Stirnseite der Außenhülse angeordnet. Die Positioniereinrichtung dient als Positionierhilfe beim Einpressen des elastischen Lagers in ein Ende eines der Wellenabschnitte und verhindert ein zu weites Eindrücken des elastischen Lagers in die Aufnahmeöffnung des Wellenabschnitts. Vorteilhaft weist die Positioniereinrichtung eine Vielzahl an vorspringen Nasen auf.

In einer vorteilhaften Ausgestaltung weist der Elastomerkörper wenigstens eine Aufdickung auf. Durch die Aufdickung wird der Elastomerkörper innerhalb der Außenhülse geklemmt. Dadurch trägt die Aufdickung zur Torsionssteifigkeit des elastischen Lagers bei. Die Aufdickung kann sich in Längsrichtung des Lagers über die gesamte Länge der Rippe oder nur über einen Abschnitt der Rippe erstrecken. Bevorzugt ist die Aufdickung an einer Seitenfläche der Rippe angeordnet. Ferner kann der Elastomerkörper auf beiden gegenüberliegenden Seitenflächen der Rippe jeweils eine Aufdickung aufweisen. Weiterhin vorteilhaft ist die Aufdickung blockförmig ausgebildet. Bei mehreren Rippen sind bevorzugt wenigstens zwei einander gegenüberliegende Rippen mit wenigstens einer Aufdickung versehen.

In einer vorteilhaften Ausgestaltung weist die Aufdickung eine in Längsrichtung des Lagers variierende Kontur auf. Dadurch kann die Torsionssteifigkeit des Lagers einfach abgestimmt werden.

Nachfolgend werden das elastische Lager sowie weitere Merkmale und Vorteile anhand von Ausführungsbeispielen näher erläutert, die in den Figuren schematisch dargestellt sind. Hierbei zeigen:
- Fig. 1: eine perspektivische Darstellung eines elastischen Lagers gemäß einer ersten Ausführungsform, wobei eine Halbschale der Außenhülse weggelassen ist;
- Fig. 2: eine perspektivische Darstellung der in Fig. 1 gezeigten Halbschale mit einem anvulkanisierten Elastomerkörper;
- Fig. 3: einen Längsschnitt durch die in Fig. 2 dargestellte Halbschale;
- Fig. 4: eine perspektivische Darstellung eines elastischen Lagers gemäß einer zweiten Ausführungsform, wobei eine Halbschale der Außenhülse weggelassen ist
- Fig. 5: eine perspektivische Darstellung der in Fig. 4 gezeigten Halbschale mit einem anvulkanisierten Elastomerkörper;
- Fig. 6: eine perspektivische Darstellung einer Halbschale mit einer Positionierhilfe;
- Fig. 7: eine perspektivische Darstellung eines Innenteils mit einem aufvulkanisierten Elastomerkörper für ein elastisches Lager gemäß einer dritten Ausführungsform;
- Fig. 8: einen Längsschnitt durch ein elastisches Lager gemäß der dritten Ausführungsform;
- Fig. 9: eine perspektivische Darstellung eines Innenteils mit einem aufvulkanisierten Elastomerkörper eines elastischen Lagers gemäß einer vierten Ausführungsform;
- Fig. 10: einen Horizontalschnitt durch ein elastisches Lagers gemäß der vierten Ausführungsform;
- Fig. 11: einen Längsschnitt durch das in Fig. 10 dargestellte elastische Lager;
- Fig. 12: einen Längsschnitt durch ein elastisches Lager gemäß einer fünften Ausführungsform;
- Fig. 13: einen Längsschnitt durch ein elastisches Lager gemäß einer sechsten Ausführungsform;
- Fig. 14: eine vergrößerten Schnitt entlang der Linie XIV-XIV in Fig. 13; und

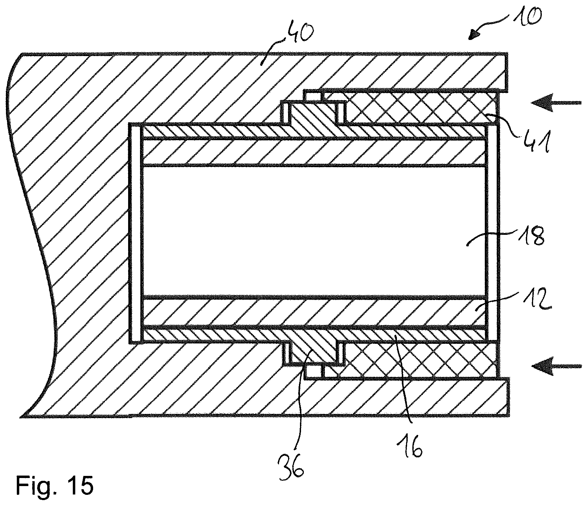

- Fig. 15: einen Horizontalschnitt durch ein elastisches Lager gemäß einer siebten Ausführungsform.

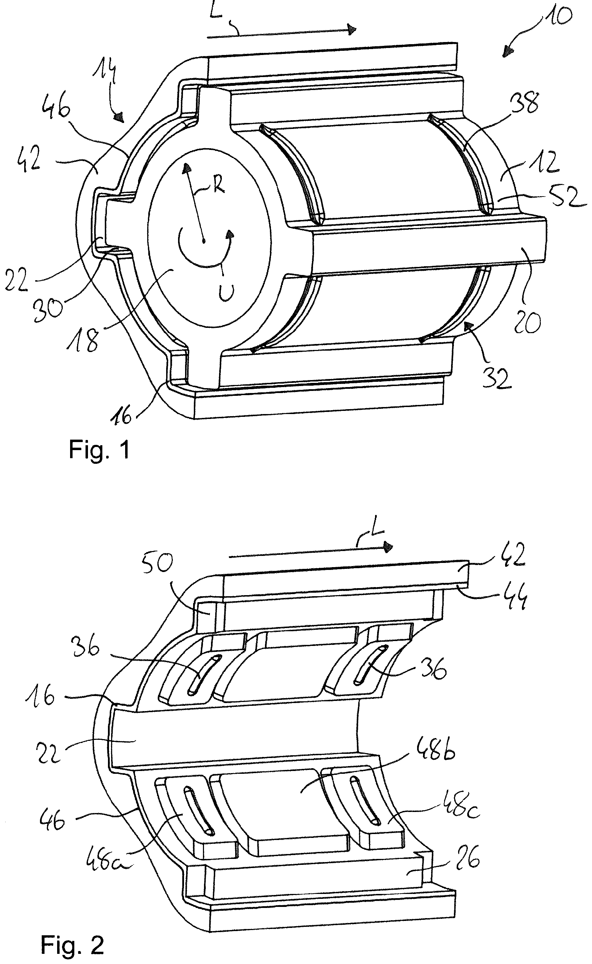

In Figur 1 ist ein elastisches Lager 10 offenbart, das zwei nicht dargestellte Wellenenden einer Lenksäule drehmomentelastisch miteinander verbindet.

Das elastische Lager 10 weist ein Innenteil 12, das mit einem Ende eines nicht dargestellten Wellenabschnitts einer Lenksäule verbindbar ist, eine das Innenteil 12 umgebende Außenhülse 14, die mit einem Ende eines anderen nicht dargestellten Wellenabschnitts einer Lenksäule verbindbar ist, und einen Elastomerkörper 16 auf, der zwischen dem Innenteil 12 und der Außenhülse 14 angeordnet ist. Das Innenteil 12 und die Außenhülse 14 können aus einem Metall oder einem Kunststoff hergestellt sein.

Zum Verbinden des Innenteils 12 mit einem nicht dargestellten Wellenabschnitt weist das Innenteil 12 eine Aufnahmeöffnung 18 auf, in die der Wellenabschnitt einpressbar ist. Die Aufnahmeöffnung 18 kann dazu eine Profilierung aufweisen. Beispielsweise kann die Aufnahmeöffnung 18 mit einer Längsverzahnung versehen sein, mittels derer das Innenteil 12 auf dem Ende eines nicht dargestellten Wellenabschnitts formschlüssig montierbar ist. Zum Verbinden der Außenhülse 14 mit dem anderen nicht dargestellten Wellenabschnitt wird die Außenhülse 14 in eine nicht dargestellte Aufnahmeöffnung des anderen Wellenabschnitts eingepresst.

Wie zudem in Figur 1 ersichtlich ist, weist das Innenteil 12 vier, in Radialrichtung R abragende Rippen 20 auf, die sich in Längsrichtung L des Lagers 10 erstrecken. Um eine Drehbewegung von dem Innenteil 12 auf die Außenhülse 14 und umgekehrt zu übertragen, weist die Außenhülse 14 vier Vertiefungen 22 auf, in die die Rippen 20 formschlüssig eingreifen.

Die Außenhülse 14 ist aus zwei Halbschalen 42 gebildet, wobei in Fig. 1 nur eine der Halbschalen 42 gezeigt ist. Die beiden Halbschalen 42 sind vorliegend im Bereich zweier gegenüberliegender Vertiefungen 22 geteilt. Zur Montage des Lagers 10 werden die beiden Halbschalen 42 um das Innenteil 12 gelegt und miteinander verbunden. Hierzu können die beiden Halbschalen formschlüssig, kraftschlüssig und/oder stoffschlüssig miteinander verbunden werden. Bevorzugt werden die beiden Halbschalen 42 miteinander verschweißt. Wenn die beiden Halbschalen 42 aus Kunststoff sind, wird als Schweißverfahren bevorzugt Ultraschallschweißen oder Kunststofflaserdurchstrahlschweißen verwendet. Alternativ kann das elastische Lager 10 samt der um das Innenteil 12 gelegten Halbschalen 42 in eine Aufnahmeöffnung eines Wellenabschnitts eingepresst werden, ohne die Halbschalen 42 vorher miteinander zu verbinden. Ferner können die beiden Halbschalen 42 miteinander verclipst sein.

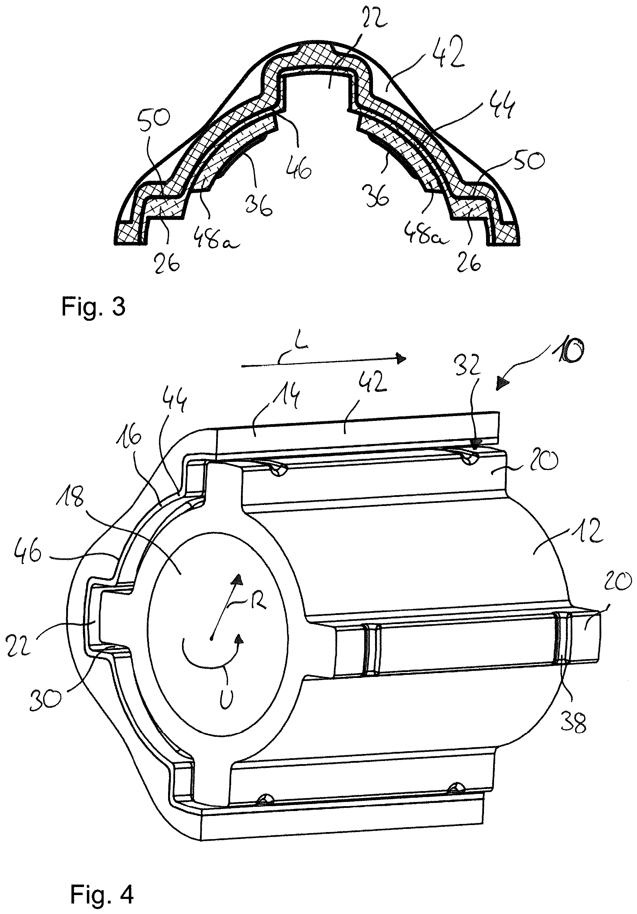

Wie in den Figuren 2 und 3 ersichtlich ist, ist ein Elastomerkörperabschnitt 44 des Elastomerkörpers 16 an eine Innenmantelfläche 46 der Halbschale 42 anvulkanissiert. Hierzu werden die Halbschalen 42 in eine Vulkanisationsform eingelegt und anschließend wird an die Innenmantelfläche 44 ein Elastomer angespritzt und vulkanisiert.

Der Elastomerkörper 16 weist ferner Pufferelemente 46a, 46b, 46c auf, die radial einwärts von dem Elastomerkörper 16 abragen. Vorliegend weist der Elastomerkörper 16 zwischen zwei Vertiefungen 22 jeweils drei Pufferelemente 48a, 48b, 48c auf, wobei die die beiden äußeren Pufferelemente 48a, 48c kleiner als das zwischen den beiden äußeren Pufferelementen 48a, 48c angeordnete Pufferelement 48b ist.

Wie zudem in den Fig. 2 und 3 ersichtlich ist, weist der Elastomerkörper 16 innerhalb zweier sich gegenüberliegender Vertiefungen 22 Aufdickungen 26 auf, die an Vertiefungsseitenwänden 50 der geteilten Vertiefungen 22 angeordnet sind und sich in Längsrichtung L des Lagers 10 erstrecken. Die Aufdickungen 26 sind vorliegend blockförmig ausgebildet und liegen im montierten Zustand der Halbschalen 42 an den Rippen 20 des Innenteils 12 an. Während der Montage der Halbschalen 42 um das Innenteil 12 können die Aufdickungen 26 komprimiert werden, um so eine radiale Vorspannung auf selbige aufzubringen. Dadurch kann die Kennung des elastischen Lagers 10 eingestellt und/oder dessen Lebensdauer erhöht werden. Insbesondere kann über die radiale Vorspannung die Torsionssteifigkeit des elastischen Lagers 10 eingestellt werden. Wenn die beiden Halbschalen 42 miteinander verschweißt werden, können die Vorspannungen während des Schweißvorgangs aufgebracht werden und so innerhalb des Bauteils in ein Kräftegleichgewicht gebracht werden.

Die Rippen 20, die in die Vertiefungen 22 ohne Aufdickungen 26 einliegen, sind von dem Elastomerkörper 16 unter Ausbildung eines Spaltes 30 beabstandet. Dadurch liegen die Rippen 20 zunächst nicht an dem Elastomerkörper 16 an, sondern erst ab einem definierten Torsionswinkel gelangen die Rippen 20 in Eingriff mit dem Elastomerkörper 16. Dadurch wird ein integrierter Torsionsendanschlag geschaffen.

Zwischen dem Innenteil 12 und dem Elastomerkörper 16 ist eine Fixierungseinrichtung 32 vorgesehen, die eine Relativbewegung zwischen dem Innenteil 12 und der Außenhülse 14 entlang der Längsachse L des Lagers 10 weitgehend verhindert. Somit bewirkt die Fixierungseinrichtung 32 eine axiale Fixierung von Innenteil 12 und Außenhülse 14. Die Fixierungseinrichtung 32 weist mehrere von den Pufferelementen 48a, 48c radial einwärts abragende Vorsprünge 36 auf, die in korrespondierende Aussparungen 38, die in eine Außenmantelfläche 52 eingebracht sind, formschlüssig und/oder kraftschlüssig eingreifen. Die Vorsprünge 36 sind aus dem Elastomer des Elastomerkörpers 16 und verlaufen in Umfangsrichtung U, wobei zwischen jeweils zwei Vertiefungen 22 zwei Vorsprünge 36 angeordnet sind. Die Aussparungen 36 können durch Umformen, wie beispielsweise Schmieden oder Hämmern, in das Innenteil 12 eingebracht werden.

Nachfolgend werden weitere Ausführungsformen des elastischen Lagers 10 beschrieben, wobei für deren Beschreibung die zuvor bereits verwendeten Bezugszeichen für gleiche oder funktionsgleiche Teile verwendet werden.

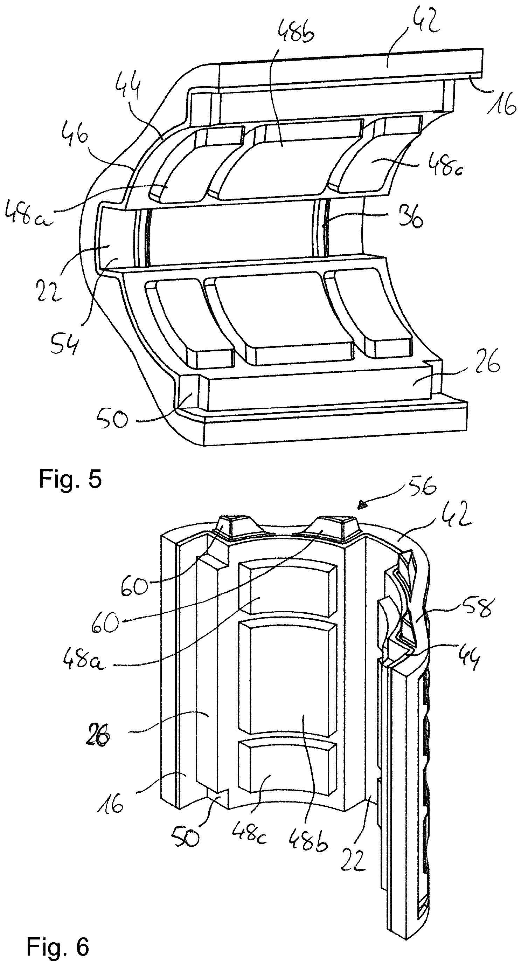

In den Figuren 4 und 5 ist eine zweite Ausführungsform des elastischen Lagers 10 gezeigt, die sich von der ersten Ausführungsform in der Anordnung der Vorsprünge 36 auf dem Elastomerkörper 16 und der Anordnung der Aussparungen 38 auf dem Innenteil 12 unterscheidet. Die Vorsprünge 36 sind innerhalb der Vertiefungen 22 angeordnet. Insbesondere ragen die Vorsprünge 36 radial einwärts von einem Vertiefungsgrund 54 der Vertiefung 22 ab. Die Aussparungen 38 sind auf den Rippen 20 aufgebracht. Hierzu können die Aussparungen 36 spanend in die Rippen 20 eingebracht werden.

In Figur 6 ist eine zweite Ausführungsform der Halbschalen 42 gezeigt, die sich von den in den Figuren 1 bis 5 gezeigten Halbschalen 42 dadurch unterscheidet, dass die Halbschalen 42 stirnseitig eine Positioniereinrichtung 56 aufweisen, die beim Einpressen der Außenhülse 14 in eine Aufnahmeöffnung eines der Wellenabschnitte deren Position zueinander festlegt. Insbesondere verhindert die Positioniereinrichtung 56 ein zu weites Einpressen des elastischen Lagers 10 in das Aufnahmeauge. Die Positioniereinrichtung 56 weist mehrere von einer Stirnseite 58 der Halbschalen 42 in Längsrichtung L vorspringende Nasen 60 auf.

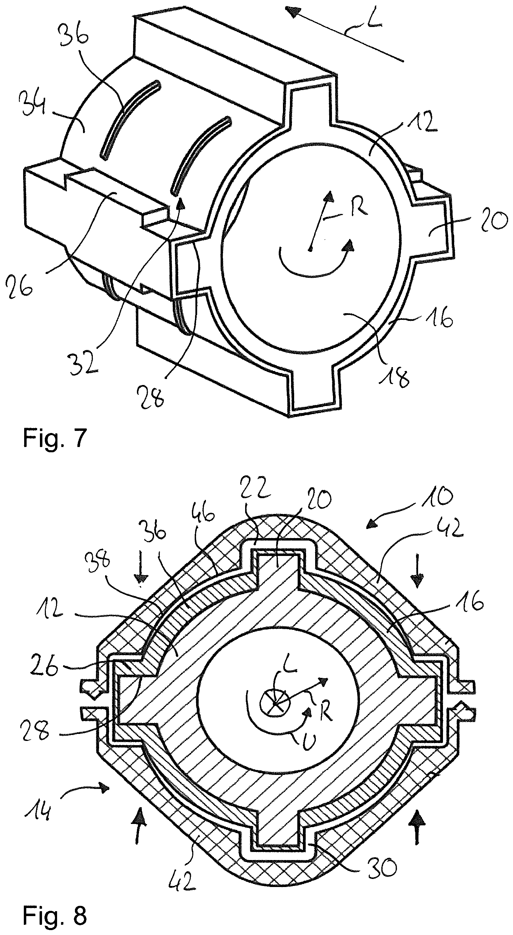

In den Figuren 7 und 8 ist eine dritte Ausführungsform des elastischen Lagers 10 gezeigt, die sich von den ersten beiden Ausführungsformen in der Anordnung des Elastomerkörpers 16 auf dem Innenteil 12 unterscheidet.

Der Elastomerkörper 16 ist stoffschlüssig mit der Außenmantelfläche 24 des Innenteils 12 verbunden. Hierzu wird das Innenteil 12 in eine Vulkanisationsform eingelegt und mit einem Elastomer umspritzt und anschließend vulkanisiert.

Wie zudem in den Figuren 7 und 8 ersichtlich ist, sind die Aufdickungen 26 auf Längsseiten 28 zweier sich gegenüberliegender Rippen 20 aufgebracht.

Bedingt durch die Vulkanisation des Elastomerkörpers 16 auf das Innenteil 12 ist die Fixierungseinrichtung 32 zwischen dem Elastomerkörper 16 und der Außenhülse 14 vorgesehen. Hierzu weist die Fixierungseinrichtung 32 mehrere an einer Außenfläche 34 des Elastomerkörpers 16 in Radialrichtung R abragende Vorsprünge 36 auf, die in korrespondierende Aussparungen 38, die in die Innenmantelfläche 46 der Außenhülse 14 eingebracht sind, formschlüssig und/oder kraftschlüssig eingreifen. Die Vorsprünge 36 sind aus dem Elastomer des Elastomerkörpers 16 und verlaufen in Umfangsrichtung U, wobei zwischen jeweils zwei Rippen 20 zwei Vorsprünge 36 angeordnet sind.

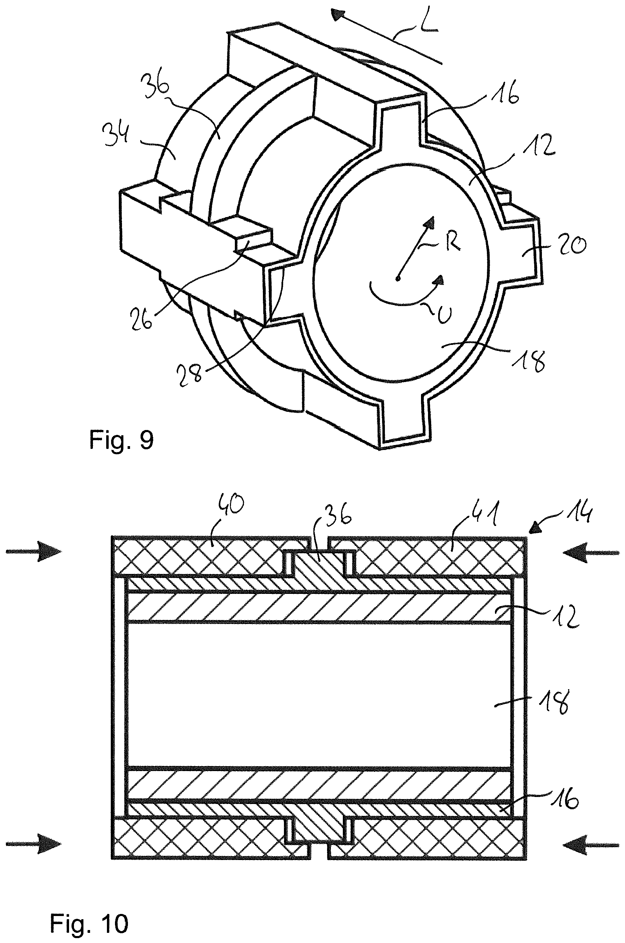

In den Fig. 9 bis 11 ist eine vierte Ausführungsform des elastischen Lagers 10 gezeigt, die sich von den anderen Ausführungsformen in der Ausgestaltung der Vorsprünge 36 sowie der Außenhülse 14 unterscheidet. Wie in Fig. 9 ersichtlich ist, erstreckt sich jeweils ein Vorsprung 36 zwischen zwei Rippen 20, wobei die Vorsprünge 36 an den Längsseiten 28 der Rippen 20 angebunden sind und dieselbe Höhe wie die Rippen 20 aufweisen.

Um die Außenhülse 14 mit dem in Fig. 9 dargestellten Elastomerkörper 16 verbinden zu können, weist die Außenhülse 14 einen ersten Hülsenabschnitten 40 und einen zweiten Hülsenabschnitt 41 auf, die auf den Elastomerkörper 16 aufgeschoben werden, wie in Fig. 10 dargestellt ist. Die beiden Hülsenabschnitte 40, 41 können formschlüssig, kraftschlüssig und/oder stoffschlüssig miteinander verbunden sein.

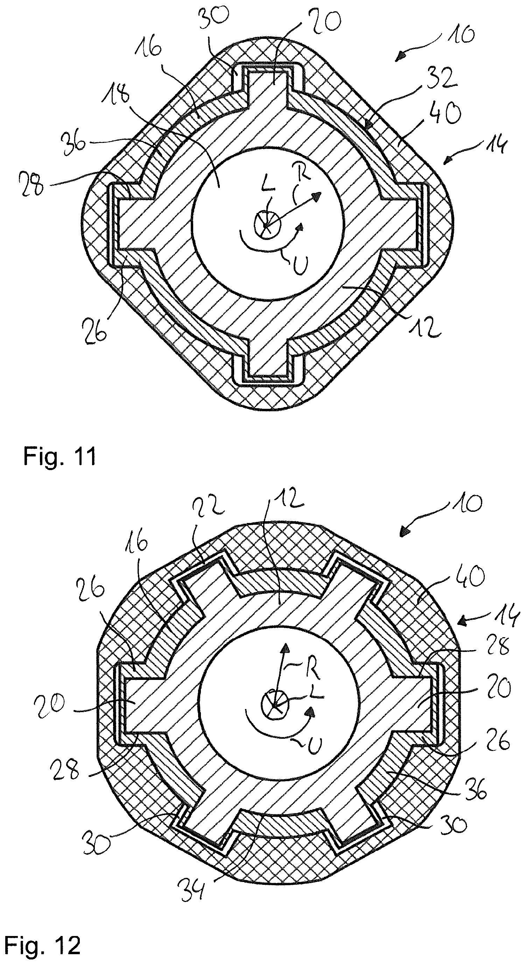

In Fig. 12 ist eine fünfte Ausführungsform des elastischen Lagers 10 gezeigt, die sich von den anderen Ausführungsformen in der Anzahl der Rippen 20 und der Anzahl der dazu korrespondierenden Vertiefungen 22 unterscheidet. Das in Fig. 12 dargestellte elastische Lager weist sechs Rippen 20 und sechs dazu in die Außenhülse 14 eingebrachte korrespondierende Vertiefungen 22 auf. Wie zudem in Fig. 12 ersichtlich ist, ist der Elastomerkörper 16 mit dem Innenteil 12 verbunden und die beiden sich in Vertikalrichtung erstreckenden Rippen 20 sind mit den Aufdickungen 26 versehen, um so die Torsionssteifigkeit einzustellen. Diejenigen Rippen 20, die keine Aufdickung 26 aufweisen, weisen eine dünne Elastomerschicht auf, so dass der Elastomerkörper 16 von der Außenhülse 14, insbesondere der Innenmantelfläche 46 der Außenhülse 14, unter Ausbildung eines Spaltes 30 ganz oder teilweise beabstandet ist. Dadurch fungieren diese Rippen 20, insbesondere Abschnitte dieser Rippen 20, als Torsionsendschlag beziehungsweise sind jeweils als gegenüberliegendes Paar für die Torsionskennlinie abstimmbar.

Bei der in Fig. 12 gezeigten Ausführungsform ist die Außenhülse 14 aus zwei Hülsenabschnitten 40, 41 gebildet.

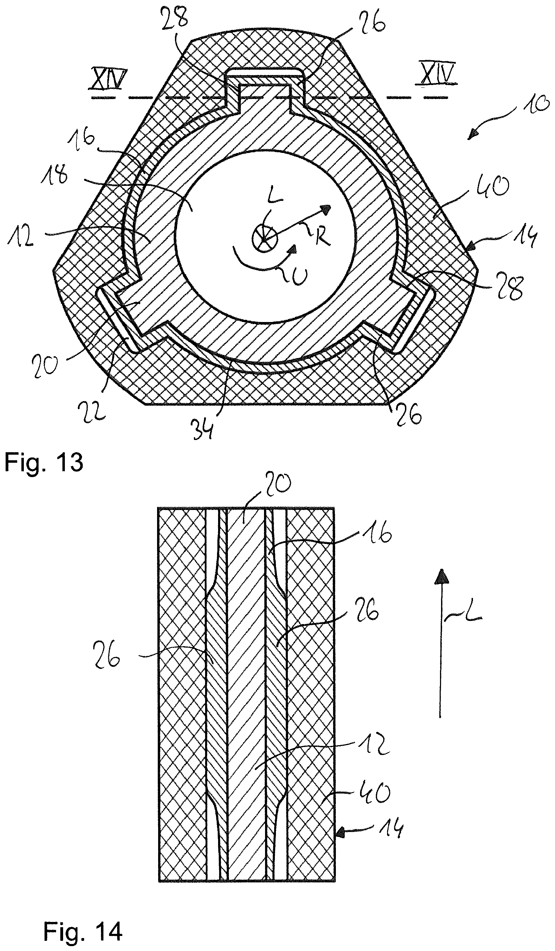

In Fig. 13 ist eine sechste Ausführungsform des elastischen Lagers 10 gezeigt, die sich von den anderen Ausführungsformen in der Anzahl der Rippen 20, der dazu korrespondierenden Vertiefungen 22 und der Anzahl der Aufdickungen 26 unterscheidet. So weist das Innenteil 12 drei Rippen 20 und die Außenhülse 14 drei dazu korrespondierende Vertiefungen 22 auf. In der in Fig. 13 gezeigten Ausführungsform ist der Elastomerkörper 16 mit dem Innenteil 12 verbunden und weist auf jeder der Rippen 20 eine Aufdickung 26 auf.

Um die Torsionscharakteristik des elastischen Lagers 10 einfach abzustimmen, kann eine Profilierung der Kontur durch die Aufdickungen 26 eingestellt werden. So kann jede der Aufdickungen 26 die in Fig. 14 gezeigte in Längsrichtung L des Lagers 10 variierende Kontur aufweisen, um die Torsionssteifigkeit des Lagers 10 einfach abzustimmen.

Bei der in Fig. 13 gezeigten Ausführungsform kann die Außenhülse 14 aus zwei Halbschalen 42 oder aus zwei Hülsenabschnitten 40, 41 gebildet.

In Fig. 14 ist eine sechste Ausführungsform des elastischen Lagers 10 gezeigt, die sich von der in Fig. 10 gezeigten Ausführungsform dadurch unterscheidet, dass der erste Hülsenabschnitt 40 ein Wellenabschnitt eines nicht dargestellten Lenkgetriebes ist. Zum Zusammenbau des in Fig. 14 gezeigten elastischen Lagers 10 wird das Innenteil 12 samt Elastomerkörper 16 in den ersten Hülsenabschnitt 40 eingesetzt. Anschließend wird der zweite Hülsenabschnitt 41 zwischen Wellenabschnitt und den Elastomerkörper 16 eingeschoben, insbesondere eingepresst. Der zweite Hülsenabschnitt 41 kann formschlüssig, kraftschlüssig und/oder stoffschlüssig mit dem Wellenabschnitt verbunden sein.

### Bezugszeichenliste

- 10: elastisches Lager
- 12: Innenteil
- 14: Außenhülse
- 16: Elastomerkörper
- 18: Aufnahmeöffnung
- 20: Rippe
- 22: Vertiefung
- 26: Aufdickung
- 28: Längsseite
- 30: Spalt
- 32: Fixierungseinrichtung
- 34: Außenfläche
- 36: Vorsprung
- 38: Aussparung
- 40: erster Hülsenabschnitt
- 41: zweiter Hülsenabschnitt
- 42: Halbschale
- 44: Elastomerkörperabschnitt
- 46: Innenmantelfläche
- 48a: Pufferelement
- 48b: Pufferelement
- 48c: Pufferelement
- 50: Vertiefungsseitenwand
- 52: Außenmantelfläche
- 54: Vertiefungsgrund
- 56: Positioniereinrichtung
- 58: Stirnseite
- 60: Nase

- R: Radialrichtung
- L: Längsrichtung
- U: Umfangsrichtung

## Patentansprüche

1. Elastisches Lager (10) zum drehelastischen Verbinden zweier Wellenabschnitte einer Lenksäule, aufweisend ein Innenteil (12), das mit einem Ende eines der Wellenabschnitte verbindbar ist, eine das Innenteil (12) umgebende Außenhülse (14), die mit einem Ende des anderen Wellenabschnitts verbindbar ist, und einen Elastomerkörper (16), der zwischen dem Innenteil (12) und der Außenhülse (14) angeordnet ist, wobei das Innenteil (12) wenigstens eine in Radialrichtung (R) abragende Rippe (20) aufweist, die zur Übertragung einer Drehbewegung in eine korrespondierende Vertiefung (22) der Außenhülse (14) eingreift, wobei die Außenhülse (14) aus wenigstens zwei Teilen gebildet ist, und wobei zwischen dem Elastomerkörper (16) und der Außenhülse (14) und/oder dem Innenteil (12) eine Fixierungseinrichtung (32) vorgesehen ist, die eine Relativbewegung zwischen dem Innenteil (12) und der Außenhülse (14) entlang einer Längsachse (L) des Lagers (10) weitgehend verhindert, **dadurch gekennzeichnet, dass** die Fixierungseinrichtung (32) wenigstens einen in Radialrichtung (R) abragenden Vorsprung (36) und wenigstens eine in eine Außenmantelfläche (52) des Innenteils (12) eingebrachte, korrespondierende Aussparung (38) und/oder wenigstens eine in eine Innenmantelfläche (30) der Außenhülse (14) eingebrachte, korrespondierende Aussparung (38) aufweist, in die der Vorsprung (36) eingreift.

2. Elastisches Lager (10) nach Anspruch 1, **dadurch gekennzeichnet, dass** die Fixierungseinrichtung (32) eine Verbindung ist, die entweder zwischen dem Elastomerkörper (16) und dem Innenteil (12) oder zwischen dem Elastomerkörper (16) und der Außenhülse (14) gebildet ist.

3. Elastisches Lager (10) nach Anspruch 1 oder 2, **dadurch gekennzeichnet, dass** der Vorsprung (37) in eine Umfangsrichtung (U) des Lagers (10) verläuft.

4. Elastisches Lager (10) nach einem der vorhergehenden Ansprüche, **dadurch gekennzeichnet, dass** der Vorsprung (36) aus dem Elastomer des Elastomerkörpers (16) gebildet ist.

5. Elastisches Lager (10) nach einem der vorhergehenden Ansprüche, **dadurch gekennzeichnet, dass** entlang der Längsachse (L) mehrere parallel zueinander angeordnete Vorsprünge (36) und korrespondierende Aussparungen (38) vorgesehen sind.

6. Elastisches Lager (10) nach einem der vorhergehenden Ansprüche, **dadurch gekennzeichnet, dass** das Innenteil (12) mehrere in Radialrichtung (R) abragende Rippen (20) aufweist, die zur Übertragung einer Drehbewegung in korrespondierende Vertiefungen (22) der Außenhülse (14) eingreifen.

7. Elastisches Lager (10) nach Anspruch 6, **dadurch gekennzeichnet, dass** zwischen jeweils zwei Rippen (20) wenigstens ein in Radialrichtung (R) abragender Vorsprung (36) angeordnet ist, der in eine dazu korrespondierende Aussparung (38) der Außenhülse (14) und/oder des Innenteils (12) eingreift, oder dass innerhalb jeder Vertiefung (22) wenigstens ein in Radialrichtung (R) abragender Vorsprung (36) angeordnet ist, der in eine dazu korrespondierende Aussparung (38) des Innenteils (12) eingreift.

8. Elastisches Lager (10) nach einem der vorhergehenden Ansprüche, **dadurch gekennzeichnet, dass** die Außenhülse (14) aus wenigstens zwei Halbschalen (42) oder aus wenigstens zwei Hülsenabschnitten (40, 41) gebildet ist.

9. Elastisches Lager (10) nach einem der vorhergehenden Ansprüche, **dadurch gekennzeichnet, dass** die wenigstens zwei Teile der Außenhülse (14) formschlüssig, kraftschlüssig und/oder stoffschlüssig miteinander verbunden sind.

10. Elastisches Lager (10) nach einem der vorhergehenden Ansprüche, **dadurch gekennzeichnet, dass** die Außenhülse (14) aus einem Kunststoff ist.

11. Elastisches Lager (10) nach einem der vorhergehenden Ansprüche, **dadurch gekennzeichnet, dass** der Elastomerkörper (16) stoffschlüssig mit dem Innenteil (12) oder der Außenhülse (14) verbunden ist.

12. Elastisches Lager (10) nach einem der vorhergehenden Ansprüche, **dadurch gekennzeichnet, dass** der Elastomerkörper (16) wenigstens ein Pufferelement (48a, 48b, 48c) aufweist.

13. Elastisches Lager nach einem der vorhergehenden Ansprüche, **dadurch gekennzeichnet, dass** die Außenhülse (14) eine Positioniereinrichtung (56) aufweist, die beim Verbinden der Außenhülse (14) mit dem Ende eines der Wellenabschnitte deren Position zueinander festlegt.

14. Elastisches Lager (10) nach einem der vorhergehenden Ansprüche, **dadurch gekennzeichnet, dass** der Elastomerkörper (16) wenigstens eine Aufdickung (26) aufweist.

15. Elastisches Lager (10) nach Anspruch 14, **dadurch gekennzeichnet, dass** die Aufdickung (26) eine in Längsrichtung (L) des Lagers (10) variierende Kontur aufweist.

## Claims

1. Elastic bearing (10) for a torsionally flexible connection of two shaft sections of a steering column, having an inner part (12) which can be connected to one end of one of the shaft sections, an outer sleeve (14) which surrounds the inner part (12) and can be connected to one end of the other shaft section, and an elastomeric body (16) which is arranged between the inner part (12) and the outer sleeve (14), the inner part (12) having at least one rib (20) which projects in a radial direction (R) and engages in a corresponding recess (22) in the outer sleeve (14) in order to transmit a rotational movement, the outer sleeve (14) being formed from at least two parts and wherein a fixing device (32) is provided between the elastomeric body (16) and the outer sleeve (14) and/or the inner part (12), wherein the fixing device largely prevents a relative movement between the inner part (12) and the outer sleeve (14) along a longitudinal axis (L) of the bearing (10), **characterized in in that** the fixing device (32) has at least one projection (36) projecting in the radial direction (R) and at least one corresponding recess (38) made in an outer lateral surface (52) of the inner part (12) and/or at least one corresponding recess (38) made in an inner lateral surface (30) of the outer sleeve (14), wherein the projection (36) engages in the recess.

2. Elastic bearing (10) according to claim 1, **characterized in that** the fixing device (32) is a connection formed either between the elastomeric body (16) and the inner part (12) or between the elastomeric body (16) and the outer sleeve (14).

3. Elastic bearing (10) according to claim 1 or 2, **characterized in that** the projection (37) extends in a circumferential direction (U) of the bearing (10).

4. Elastic bearing (10) according to one of the preceding claims, **characterized in that** the projection (36) is formed from the elastomer of the elastomeric body (16).

5. Elastic bearing (10) according to one of the preceding claims, **characterized in that** a plurality of projections (36) arranged in parallel to one another and corresponding recesses (38) are provided along the longitudinal axis (L).

6. Elastic bearing (10) according to one of the preceding claims, **characterized in that** the inner part (12) has a plurality of ribs (20) projecting in the radial direction (R), which engage in corresponding recesses (22) of the outer sleeve (14) in order to transmit a rotational movement.

7. Elastic bearing (10) according to claim 6, **characterized in that** at least one projection (36) projecting in the radial direction (R) is arranged between each two ribs (20) and engages in a corresponding recess (38) of the outer sleeve (14) and/or of the inner part (12), or **in that** at least one projection (36) projecting in the radial direction (R) is arranged within each recess (22) and engages in a corresponding recess (38) of the inner part (12).

8. Elastic bearing (10) according to one of the preceding claims, **characterized in that** the outer sleeve (14) is formed from at least two half-shells (42) or from at least two sleeve sections (40, 41).

9. Elastic bearing (10) according to one of the preceding claims, **characterized in that** the at least two parts of the outer sleeve (14) are connected to one another in a form-fitting, force-fitting and/or materially bonded manner.

10. Elastic bearing (10) according to one of the preceding claims, **characterized in that** the outer sleeve (14) is made of a plastic.

11. Elastic bearing (10) according to one of the preceding claims, **characterized in that** the elastomeric body (16) is connected to the inner part (12) or the outer sleeve (14) in a materially bonded manner.

12. Elastic bearing (10) according to one of the preceding claims, **characterized in that** the elastomeric body (16) has at least one buffer element (48a, 48b, 48c).

13. Elastic bearing according to one of the preceding claims, **characterized in that** the outer sleeve (14) has a positioning device (56) which, when the outer sleeve (14) is connected to the end of one of the shaft sections, fixes their position relative to one another.

14. Elastic bearing (10) according to one of the preceding claims, **characterized in that** the elastomeric body (16) has at least one thickening (26).

15. Elastic bearing (10) according to claim 14, **characterized in that** the thickening (26) has a contour varying in the longitudinal direction (L) of the bearing (10).

## Revendications

1. Palier élastique (10) pour la liaison élastique en torsion de deux sections d'arbre d'une colonne de direction, comprenant une partie intérieure (12) qui peut être reliée à une extrémité de l'une des sections d'arbre, un manchon extérieur (14) qui entoure la partie intérieure (12) et qui peut être reliée à une extrémité de l'autre section d'arbre, et un corps élastomère (16) qui est disposé entre la partie intérieure (12) et le manchon extérieur (14), qui est disposée entre la partie intérieure (12) et le manchon extérieur (14), la partie intérieure (12) présentant au moins un renfort (20) qui fait saillie dans la direction radiale (R) et s'engage dans un évidement correspondant (22) du manchon extérieur (14) pour transmettre un mouvement de rotation, le manchon extérieur (14) étant formée d'au moins deux parties et dans lequel un dispositif de fixation (32) est prévu entre le corps élastomère (16) et le manchon extérieur (14) et/ou la partie intérieure (12), lequel dispositif de fixation (32) empêche largement un mouvement relatif entre la partie intérieure (12) et le manchon extérieur (14) le long d'un axe longitudinal (L) du palier (10), **caractérisé en ce que** le dispositif de fixation (32) présente au moins une saillie (36) faisant saillie dans la direction radiale (R) et au moins un évidement correspondant (38) ménagé dans une surface latérale extérieure (52) de la partie intérieure (12) et/ou au moins un évidement correspondant (38) ménagé dans une surface latérale intérieure (30) du manchon extérieur (14), dans lequel s'engage la saillie (36).

2. Palier élastique (10) selon la revendication 1, **caractérisé en ce que** le dispositif de fixation (32) est une liaison formée soit entre le corps élastomère (16) et la partie intérieure (12), soit entre le corps élastomère (16) et le manchon extérieur (14).

3. Palier élastique (10) selon la revendication 1 ou 2, **caractérisé en ce que** la saillie (37) s'étend dans une direction circonférentielle (U) du palier (10).

4. Palier élastique (10) selon l'une des revendications précédentes, **caractérisé en ce que** la saillie (36) est formée à partir de l'élastomère du corps élastomère (16).

5. Palier élastique (10) selon l'une des revendications précédentes, **caractérisé en ce qu'**une pluralité de saillies (36) et d'évidements correspondants (38) disposés parallèlement les uns aux autres sont prévus le long de l'axe longitudinal (L).

6. Palier élastique (10) selon l'une des revendications précédentes, **caractérisé en ce que** la partie intérieure (12) présente une pluralité de renforts (20) faisant saillie dans la direction radiale (R) et s'engageant dans des évidements correspondants (22) dans le manchon extérieur (14) afin de transmettre un mouvement de rotation.

7. Palier élastique (10) selon la revendication 6, **caractérisé en ce qu'**au moins une saillie (36) faisant saillie dans la direction radiale (R) est disposée entre chaque fois deux renforts (20) et s'engage dans un évidement correspondant (38) du manchon extérieur (14) et/ou de la partie intérieure (12), ou **en ce qu'**au moins une saillie (36) faisant saillie dans la direction radiale (R) est disposée à l'intérieur de chaque évidement (22) et s'engage dans un évidement correspondant (38) de la partie intérieure (12).

8. Palier élastique (10) selon l'une des revendications précédentes, **caractérisé en ce que** le manchon extérieur (14) est formé d'au moins deux demi-coquilles (42) ou d'au moins deux sections de manchon (40, 41).

9. Palier élastique (10) selon l'une des revendications précédentes, **caractérisé en ce que** les au moins deux parties du manchon extérieur (14) sont reliées l'une à l'autre par complémentarité de forme, de force et/ou de matière.

10. Palier élastique (10) selon l'une des revendications précédentes, **caractérisé en ce que** le manchon extérieur (14) est en matière plastique.

11. Palier élastique (10) selon l'une des revendications précédentes, **caractérisé en ce que** le corps élastomère (16) est lié matériellement à la partie intérieure (12) ou au manchon extérieur (14).

12. Palier élastique (10) selon l'une des revendications précédentes, **caractérisé en ce que** le corps élastomère (16) présente au moins un élément tampon (48a, 48b, 48c).

13. Palier élastique selon l'une des revendications précédentes, **caractérisé en ce que** le manchon extérieur (14) comporte un dispositif de positionnement (56) qui, lorsque le manchon extérieur (14) est relié à l'extrémité de l'une des sections d'arbre, fixe leur position l'une par rapport à l'autre.

14. Palier élastique (10) selon l'une des revendications précédentes, **caractérisé en ce que** le corps élastomère (16) comporte au moins un épaississement (26).

15. Palier élastique (10) selon la revendication 14, **caractérisé en ce que** l'épaississement (26) présente un contour variant dans la direction longitudinale (L) du palier (10).
